(19) Europäisches Patentamt
European Patent Office
Office européen des brevets

(11) EP 1 697 479 B1

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **04804537.1**

(22) Anmeldetag: **16.11.2004**

(51) Int Cl.:
***C09J 133/00*** *(2006.01)* ***C09J 133/06*** *(2006.01)*
***C09J 7/02*** *(2006.01)* ***C09J 11/08*** *(2006.01)*

(86) Internationale Anmeldenummer:
**PCT/EP2004/052969**

(87) Internationale Veröffentlichungsnummer:
**WO 2005/059052 (30.06.2005 Gazette 2005/26)**

(54) **VERFAHREN ZUR HERSTELLUNG VON ACRYLATSCHMELZHAFTKLEBERN**

METHOD FOR PRODUCING ACRYLIC FUSIBLE ADHESIVES

PROCEDE DE PRODUCTION D'ADHESIFS FUSIBLES ACRYLIQUES

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **16.12.2003 DE 10359349**

(43) Veröffentlichungstag der Anmeldung:
**06.09.2006 Patentblatt 2006/36**

(73) Patentinhaber: **tesa SE**
**22848 Norderstedt (DE)**

(72) Erfinder:
- **HUSEMANN, Marc**
**22559 Hamburg (DE)**
- **ZÖLLNER, Stephan**
**21244 Buchholz i.d. Nordheide (DE)**

(74) Vertreter: **Heins, Matthias**
**tesa SE**
**Kst. 9500**
**Hugo-Kirchberg-Strasse 1**
**22848 Norderstedt (DE)**

(56) Entgegenhaltungen:
**EP-A- 1 293 547** **EP-A- 1 300 455**
**WO-A-01/96413** **WO-A-01/98383**
**US-A- 4 199 646**

Bemerkungen:
Die Akte enthält technische Angaben, die nach dem Eingang der Anmeldung eingereicht wurden und die nicht in dieser Patentschrift enthalten sind.

EP 1 697 479 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Acrylatschmelzhaftklebern sowie deren Verwendung.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch, durch UV-Vernetzung oder durch ES-Härtung (wobei ES für Elektronenstrahlung steht). Der beschriebene Prozeß ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Verbesserung dieser Nachteile bedeutet der Heißschmelz-Prozeß (Hotmelt-Prozeß). Hier wird der Haftkleber in der Schmelze auf das Trägermaterial aufgetragen. Mit dieser neuen Technik sind aber auch Einschränkungen verbunden. Vor der Beschichtung wird der Haftklebemasse das Lösemittel in einem Trocknungsextruder entzogen. Der Trocknungsprozeß ist mit einer relativ hohen Temperatur und Schereinwirkung verbunden, so daß besonders hochmolekulare Polyacrylathaftklebemassen stark geschädigt werden. Die Acrylathaftklebemasse vergelt oder der niedermolekulare Anteil wird durch Molekulargewichtsabbau stark angereichert. Beide Effekte sind unerwünscht, da sie für die Anwendung nachteilig sind. Die Klebemasse läßt sich entweder nicht mehr beschichten oder die klebtechnischen Eigenschaften der Haftklebemasse verändern sich, da z. B. bei Einwirken einer Scherkraft auf die Klebmasse die niedermolekularen Anteile als Gleitmittel wirken und so zu einem vorzeitigen Versagen der Klebemasse führen.

Ein weiterer Nachteil von Acrylatschmelzhaftklebern ist die auftretende Orientierung nach der Extrusionsbeschichtung. Während der Beschichtung wird der Schmelzkleber durch eine Düse gepreßt und anschließend mit dem Übertrag auf das Trägermaterial noch einmal gereckt. Auf diese Weise orientieren sich die Polymerketten, um sich dann auf dem Trägermaterial wieder in den ursprünglichen Zustand der Unordung (thermodynamisches Grundprinzip) zurückzubewegen. Dies äußert sich visuell in einem Rückschrumpf der Haftklebemasse, der in einigen Fällen gewollt sein kann, aber im Vergleich zur konventionellen Lösemittelbeschichtung ungewöhnlich ist (DE 100 34 069.5).

Aufgabe der Erfindung ist es, die Nachteile nach dem Stand der Technik zu beseitigen. Es soll insbesondere ein Verfahren zur Herstellung von Acrylatschmelzhaftklebern mit hoher Scherfestigkeit und hoher Wärmebeständigkeit angegeben werden. Fern sollen diese Acrylatschmelzhaftkleber für die Herstellung hochscherfester Acrylatschmelzhaftklebebänder mit hoher Wärmebeständigkeit geeignet sein.

Diese Aufgabe wird durch die Merkmale der Ansprüche 1 sowie 8 und 9 gelöst.
Zweckmäßige Ausgestaltungen der Erfindungen ergeben sich aus den Merkmalen der Ansprüche 2 bis 7. Nach Maßgabe der Erfindung ist ein Verfahren zur Herstellung von Acrylatschmelzhaftklebern vorgesehen, daß die Schritte

(a) Bereitstellen eines haftklebrigen Polyacrylats und eines di- oder polyfunktionellen Reaktivharzes, wobei das haftklebrige Polyacrylat zumindest eine funktionelle Gruppe aufweist, die es zur Reaktion mit dem di- oder polyfunktionellen Reaktivharz befähigen;

(b) Herstellen eines Gemisches, umfassend das haftklebrige Polyacrylat und das di- oder polyfunktionelle Reaktivharz, durch Mischen des haftklebrigen Polyacrylats in der Schmelze mit dem di- oder polyfunktionellen Reaktivharz;

(c) Beschichten des Gemisches auf ein Trägermaterial; und

(d) thermisches Aushärten des Gemisches auf dem Trägermaterial
umfaßt und das dadurch gekennzeichnet ist, dass das haftklebrige Polyacrylat aus einer Comonomerenzusammensetzung gebildet wird, die

(a1) 75 bis 98 Gew.-% Acrylsäureester und/oder Methacrylsäureester der Formel $CH_2=C(R_1)(COOR_2)$, wobei $R_1$ H oder $CH_3$ darstellt und $R_2$ eine Alkylkette mit 1 bis 20 Kohlenstoffatomen darstellt;

(a2) 0 bis 10 Gew.-% Acrylsäure und/oder Methacrylsäure der Formel $CH_2=CH(R_1)(COOH)$, wobei $R_1$ H oder $CH_3$ darstellt;

(a3) 0 bis 5 Gew.-% olefinisch ungesättigte Monomere mit UV-vernetzenden funktionellen Gruppen;

(a4) 0 bis 20 Gew.-% olefinisch ungesättigte Monomere mit funktionellen Gruppen, die zur Reaktion mit den Reaktivharzen befähigt sind;
umfaßt.

Der so erhaltene Acrylatschmelzhaftkleber kann bei geeigneter Wahl des Trägermaterials gemeinsam mit diesem als Acrylatschmelzhaftklebeband verwendet werden. Dieses Acrylatschmelzhaftklebeband ist hochscherfest und weist eine hohe Wärmebeständigkeit auf.

Zweckmäßigerweise wird das haftklebrige Polyacrylat in der Schmelze in einem statischen Mischkopf mit dem di- oder polyfunktionellen Reaktivharz vermischt.

Das Gemisch wird vorzugsweise über eine Düse, über eine Rakel oder über einen Walzenstuhl auf das Trägermaterial beschichtet.

Für die Umsetzung des erfindungsgemäßen Verfahrens wird in einem ersten Behälter im wesentlichen das Reaktivharz vorgelegt, während in einem zweiten Behälter im wesentlichen das Polyacrylat vorgelegt wird, wobei gegebenenfalls die weiteren Rezeptierungsbestandteile diesen beiden Komponenten bereits zuvor in einem üblichen Mischverfahren zugemischt wurden.

Im folgenden werden das haftklebrige Polyacrylat auch als Polyacrylat oder Polymer und das di- oder polyfunktionelle Reaktivharz auch als Reaktivharz bezeichnet. Sowohl das Polyacrylat als auch das Reaktivharz werden auch als Komponente oder Komponenten bezeichnet.

Für den Begriff "Acrylatschmelzhaftkleber" wird im folgenden der Begriff "Haftklebemasse" synonym verwendet. Das Acrylatschmelzhaftklebeband wird auch als Klebeband oder Haftklebeband bezeichnet.

In einem Mischer einer Mehrkomponenten-Misch- und Dosieranlage werden die beiden Komponenten gemischt. Die Dosierung zur Einhaltung der stöchiometrischen Verhältnisse der Reaktivkomponenten wird über ein Durchflußmeßgerät automatisch geregelt.

Die so gemischte Haftklebemasse wird auf ein Trägermaterial aufgebracht, das sich bevorzugt mit konstanter Geschwindigkeit bewegt. Die beschichtete Haftklebmasse wird durch einen Wärmekanal geführt, in dem die Haftklebemasse aushärtet. Das Auftragsgewicht der Haftklebemasse ist beliebig wählbar, vorzugsweise werden Auftragsgewichte zwischen 10 und 1000 $g/m^2$, besonders bevorzugt zwischen 25 und 200 $g/m^2$ eingestellt.

Gegenüber der konventionellen Lösungsmittelbeschichtung lassen sich mit diesem Verfahren besonders bevorzugt Haftklebemasse mit hohem Masseauftrag herstellen, da hier die Blasenbildung vermieden werden kann.

Besonders bevorzugt umfaßt die Comonomerzusammensetzung des haftklebrigen Polyacrylats

(a1) 86 bis 90 Gew.-% Acrylsäureester und/oder Methacrylsäureester der Formel $CH_2=CH(R_1)(COOR_2)$, wobei $R_1$ H oder $CH_3$ darstellt und $R_2$ eine Alkylkette mit 1 bis 20 Kohlenstoffatomen darstellt;

(a2) 4 bis 6 Gew.-% Acrylsäure und/oder Methacrylsäure der Formel $CH_2=CH(R_1)(COOH)$, wobei $R_1$ H oder $CH_3$ darstellt;

(a3) 0,5 bis 1,5 Gew.-% olefinisch ungesättigte Monomere mit UV-vernetzenden funktionellen Gruppen; und

(a4) 0 bis 20 Gew.-% olefinisch ungesättigte Monomere mit funktionellen Gruppen, die zur Reaktion mit den Reaktivharzen befähigt sind.

Die Monomere der Comonomerzusammensetzung werden bevorzugt dermaßen gewählt, daß die resultierenden Polymere bei Raumtemperatur als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, daß sich nach der Fox-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{W_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für (a1) Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, wie z. B. Isobutylacrylat, 2-Ethylhexylacrylat, 2-Ethylhexylmethacrylat, Isooctylacrylat und Isooctylmethacrylat.

Weitere einzusetzende Verbindungsklassen für (a1) sind monofunktionelle Acrylate bzw. Methacrylate von überbrückten Cycloalkylalkoholen, bestehend aus zumindest 6 C-Atomen. Die Cycloalkylalkohole können auch substituiert sein, z. B. durch Alkylgruppen mit 1 bis 6 Kohlenstoffatomen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Ausführungsform werden für (a4) Monomere eingesetzt, die polare Gruppen wie Carbonsäuregruppen, Säureanhydridgruppen, Phosphonsäuregruppen, Hydroxygruppen, Amid-, Imid- oder Aminogruppen, Isocyanatgruppen, Epoxygruppen oder Thiolgruppen tragen.

Monomere für (a4) sind z. B. N,N-Dialkyl-substituierte Amide, wie z. B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele für (a4) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Glycerylmethacrylat, 6-Hydroxyhexylmethacrylat, Vinylessigsäure, β-Acryloyloxypropionsäure, Trichloracrylsäure, Fumarsäure, Crotonsäure, Aconitsäure, Acrylnitril und Dimethylacrylsäure, wobei diese Aufzählung nicht abschließend ist.

Weiterhin werden in einer weiteren Ausführungsform für (a3) Photoinitiatoren mit einer copolymerisierbaren Doppelbindung eingesetzt. Als Photoinitiatoren sind Norrish-I- und -II-Photoinitiatoren geeignet. Beispiele sind z. B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren, die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird auf Carroy et al. in "Chemistry and Technology of UV and EB Formulation for Coatings, Inks and Paints", Oldring (Hrsg.), 1994, SITA, London, verwiesen.

Zur Herstellung der Haftklebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60-147, beschrieben. Diese Methoden werden in bevorzugter Weise in Analogie angewendet.

Beispiele für Radikalquellen sind Peroxide, Hydroperoxide und Azoverbindungen. Beispiele für typische Radikalinitiatoren sind Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat und Benzpinacol, wobei die Aufzählung nicht abschließend ist. In einer sehr bevorzugten Ausführungsform wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der radikalischen Polymerisation entstehenden Haftklebemassen werden sehr bevorzugt derart gewählt, daß sie in einem Bereich von 20.000 bis 500.000 g/mol liegen; speziell für die weitere Verwendung als Acrylatschmelzhaftkleber werden Haftklebemassen mit mittleren Molekulargewichten $M_n$ von 100.000 bis 300.000 g/mol hergestellt. Durch die Herabsetzung des Molekulargewichtes wird die Fließviskosität herabgesetzt, so daß weniger Mischenergie aufgebracht werden muß.

Die Bestimmung des mittleren Molekulargewichtes erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wäßrigen Polymerisationsreaktionen können mit einem mit Wasser

mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden aus der Gruppe gewählt, die aliphatische Alkohole, Glycole, Ether, Glycolether, Pyrrolidine, N-Alkylpyrrolidinone, N-Alkylpyrrolidone, Polyethylenglycole, Polypropylenglycole, Amide, Carbonsäure und Salze davon, Ester, Organosulfide, Sulfoxide, Sulfone, Alkoholderivate, Hydroxyetherderivate, Aminoalkohole, Ketone und dergleichen, sowie Derivate und Gemische davon umfaßt.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide des Typs (NIT 1) oder (NIT 2) eingesetzt:

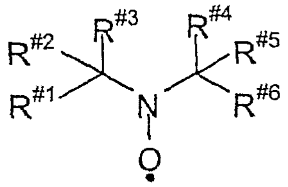

(NIT 1)

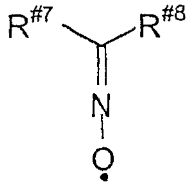

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z. B. Chlor, Brom oder Iod;
ii) lineare, verzweigte, cyclische und heterocyclische Kohlenwasserstoffe mit 1 bis 20 Kohlenstoffatomen, die gesättigt, ungesättigt oder aromatisch sein können;
iii) Ester $-COOR^{\#9}$, Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (wobei es bevorzugt wird, daß zumindest einer der oben genannten Reste eine derartige Polymerkette darstellt) und somit zum Aufbau von Blockcopolymeren als Makroradikale oder Makroregler genutzt werden.

Stärker bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-Oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-Butylnitroxid
- Diphenylnitroxid
- t-Butyl-t-amylnitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in US 5,945,491 A, US 5,854,364 A und US 5,789,487 A beschrieben.

Weiterhin vorteilhaft kann das erfindungsgemäß genutzte Polymer über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im allgemeinen durch die Struktur $P_L$(A)-Me repräsentiert, wobei Me ein Metall der Gruppe I des Periodensystems, wie z. B. Lithium, Natrium oder Kalium, und $P_L$(A) ein wachsender Polymerblock aus den Monomeren [(a1) bis (a4)] ist. Die Molmasse des herzustellenden Polymers wird durch das Verhältnis von Initiatorkonzentration zu Monomerkonzentration vorgegeben.
Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättgter aliphatischer Rest sein kann. Der Phenylring φ kann optional einen oder mehrere Polymerblöcke, beispielsweise Polybutadien, Polyisopren, Polychloropren oder Poly(meth)acrylat, das entsprechend der Definition für das haftklebrige Polyacrylat aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

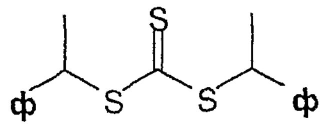

(TTC 1)

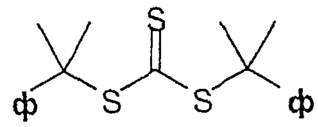

(TTC 2)

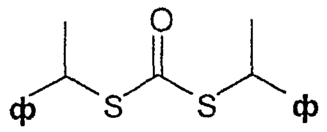

(THI 1)

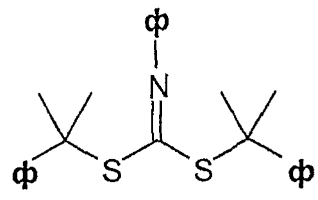

(THI 2)

Außerdem können Thioester der allgemeinen Struktur $R^{\$1}$-C(S)-S-$R^{\$2}$ (THE) zum Einsatz kommen, insbesondere, um asymmetrische Systeme herzustellen. Dabei können $R^{\$1}$ und $R^{\$2}$ unabhängig voneinander gewählt werden, wobei $R^{\$1}$ ein Rest aus einer der folgenden Gruppen i) bis iv) und $R^{\$2}$ ein Rest aus einer der folgenden Gruppen i) bis iii) sein kann:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterocyclen;
ii) $-NH_2$, -NH-$R^{\$3}$, -N$R^{\$3}R^{\$4}$, -NH-C(O)-$R^{\$3}$, -N$R^{\$3}$-C(O)-$R^{\$4}$, -NH-C(S)-$R^{\$3}$, -N$R^{\$3}$-C(S)-$R^{\$4}$,

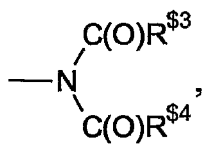 , 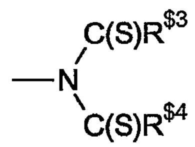 , 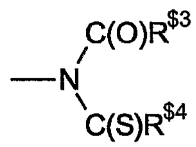

wobei $R^{\$3}$ und $R^{\$4}$ unabhängig voneinander gewählte Reste aus der Gruppe i) sind;
iii) -S-$R^{\$5}$, -S-C(S)-$R^{\$5}$, wobei $R^{\$5}$ ein Rest aus einer der Gruppen i) oder ii) sein kann;
iv) -O-$R^{\$6}$, -O-C(O)-$R^{\$6}$, wobei $R^{\$6}$ ein Rest aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozeß wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Als Reaktivharze können prinzipiell alle Harze eingesetzt werden, die zumindest zwei funktionelle Gruppen aufweisen, die zur Reaktion mit dem Polyacrylat befähigt sind.

Eine sehr bevorzugte Gruppe umfaßt Epoxy-Harze. Das Molekulargewicht der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester, das Reaktionsprodukt aus Epichlorhydrin und p-Aminophenol.

Bevorzugte kommerzielle Beispiele sind z. B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z. B. Vinylcyclohexandioxide, wie ERL-4206, ERL-4221, ERL 4201, ERL-4289 oder ERL-0400 von Union Carbide Corp.

Als Novolak-Harze können z. B. eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z. B. Cymel™ 327 und 323 von Cytec.

Weiterhin lassen sich als Reaktivharze auch Terpenphenolharze, wie z. B. NIREZ™ 2019 von Arizona Chemical einsetzen.

Weiterhin lassen sich als Reaktivharze auch Phenolharze, wie z. B. YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie z. B. Coronate™ L von Nippon Polyurethan Ind., Desmodur™ N3300 oder Mondur™ 489 von Bayer einsetzen.

Um die Reaktion zwischen den beiden Komponenten zu beschleunigen, können Vernetzer und Beschleuniger zu der Mischung zugegeben werden. Als Beschleuniger eignen sich z. B. Imidazole, kommerziell erhältlich unter 2M7, 2E4MN, 2PZ-CN, 2PZ-CNS, P0505, L07N von Shikoku Chem. Corp. oder Curezol 2MZ von Air Products.

Weiterhin lassen sich auch Amine, insbesondere tert.-Amine zur Beschleunigung einsetzen.

In einer möglichen Ausführungsform enthält die Haftklebemasse weitere Rezeptierungsbestandteile, wie zum Beispiel Füllstoffe, Pigmente, rheologische Additive, Additive zur Verbesserung der Haftung, Weichmacher, Harze, Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5-, C-9-, $(C\text{-}5)_2$-Harze), gemischte C-5/C-9-Harze, hydrierte und teilhydrierte Derivate der genannten Typen, Harze aus Styrol oder $\alpha$-Methylstyrol sowie Terpen-Phenolharze und weitere wie aufgeführt in Ullmanns Enzyklopädie der technischen Chemie (4. Aufl.), Band 12, S. 525- 555, Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR; solche Polymere sind zum Beispiel als SEPS und SEBS bekannt).

Weiterhin können den erfindungsgemäßen Haftklebemassen optional auch UV-Photoinitiatoren hinzugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthylsulfonylchlorid,

und photoaktive Oxime, wie z. B. 1-Phenyl-1,2-propandion2-(O-ethoxycarbonyl )oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London, zu Rate gezogen werden.

Die Funktionalitäten der miteinander reagierenden Komponenten müssen so ausgewählt werden, daß mindestens eine der beiden Komponenten eine Funktionalität größer zwei hat, so daß eine Vernetzung bzw. Kettenverlängerung eintreten kann.

Die Klebmassen können direkt, im indirekten Transferverfahren, durch Coextrusion mit dem Träger, aus der Schmelze aufgetragen werden. Eine besonders bevorzugte Auftragsform ist die Beschichtung auf ein Trennpapier oder einen Prozeßliner.

Hier wird mit der noch nicht gehärteten, pastösen oder flüssigen Klebemasse unter Zuhilfenahme der Zweikomponentenmischtechnik in der gewünschten Schichtdicke beschichtet.

Anschließend erfolgt die Härtung bzw. Vernetzung der Haftklebemasse im Trockenkanaldurchlauf bei einer Temperatur zwischen Raumtemperatur und 130 °C, abhängig von der gewählten Rezeptur, funktionellen Gruppen sowie gegebenenfalls der Beschleuniger oder Katalysatormenge.

Prinzipiell ist es auch möglich, die Haftklebemassen mit Elektronenstrahlen zusätzlich zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Zur optionalen UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepaßt.

Das so hergestellte Transferklebeband kann in dieser Form aufgewickelt werden oder zu einem Trägermaterial kaschiert werden.

Als Trägermaterialien für die Klebemasse, beispielsweise für Klebebänder, werden die dem Fachmann geläufigen und üblichen Materialien, wie Folien (Polyester, PET, PE, PP, BOPP, PVC, Polyimid), Vliese, Schäume, Gewebe und Gewebefolien und Metallfolien verwendet.

Auf diesem Weg können ein- oder doppelseitige Klebebänder hergestellt werden.

Im folgenden wird das erfindungsgemäße Verfahren anhand von Beispielen näher erläutert.

<u>Beispiele</u>

<u>TESTMETHODEN</u>

<u>180°-Klebkrafttest (Test A)</u>

Ein 20 mm breiter Streifen eines Klebebandes, das aus einer auf Polyester als Schicht aufgetragenen Acrylathaftklebemasse bestand, wurde auf eine Stahlplatte aufgebracht. Der Streifen wurde zweimal mit einem 2-kg-Gewicht auf das Substrat aufgedrückt. Das Klebeband wurde anschließend sofort mit 300 mm/min und im 180° Winkel vom Substrat abgezogen. Die Stahlplatte wurde zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt.

<u>Scherfestigkeit (Test B)</u>

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei Raumtemperatur

wurde ein 1 kg-Gewicht an dem Klebeband befestigt. Die gemessenen Scherstandzeiten sind in Minuten angegeben und entsprechen dem Mittelwert aus drei Messungen. Klebebänder mit einer Scherfestigkeit von größer 250 Minuten lassen sich technisch einsetzen.

Gelpermeationschromatographie GPC (Test C)

Die Bestimmung des mittleren Molekulargewichtes $M_W$ und der Polydisperistät PD erfolgte durch die Firma Polymer Standards Service in Mainz. Als Eluent wurde THF mit 0.1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1.0 ml pro Minute. Es wurde gegen PMMA-Standards gemessen.

Herstellung des Nitroxids Ia (2,2,5-Trimethyl-4-phenyl-3-azahexan-3-nitroxid):

Es wurde analog der Versuchsvorschrift aus Journal of American Chemical Society, 121, 16, 3904-3920, 1999 vorgegangen.

Herstellung des Alkoxyamins IIa (2,2,5-Trimethyl-3-(1-phenylethoxy)-4-phenyl-3-aza-hexan):

Es wurde analog der Versuchsvorschrift aus Journal of American Chemical Society, 121, 16, 3904-3920, 1999 vorgegangen.

Allgemeine Durchführung der Nitroxid-gesteuerten Polymerisationen:

Eine Mischung aus dem Alkoxyamin IIa, dem Nitroxid Ia (5 Mol-% bezogen auf Alkoxyamin IIa), und 2.5 Mol% Vazo 88™ (2.5 Mol-% bezogen auf Alkoxyamin IIa) werden mit dem Monomeren (85%ige Lösung in Xylol) gemischt, mehrmals entgast und anschließend unter Argonatmosphäre auf 125 °C erhitzt. Die Reaktionszeit beträgt 24 h. Die Molekulargewichtsbestimmung und die Polydispersität erfolgte via GPC.

Herstellung der Polyacrylate

Polyacrylat 1:

Es wurden 28 g Acrylsäure, 292 g 2-Ethylhexylacrylat, 40 g Methylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt.

Polycrylat 2:

Es wurden 28 g Acrylsäure, 20 g Methylacrylat, 20 g Styrol und 332 g 2-Ethylhexylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt.

Polyacrylat 3:

Es wurden 40 g Hydroxyethylacrylat, 80 g Methylacrylat und 280 g 2-Ethylhexylacrylat eingesetzt. Als Initiatoren und Regler wurden 325 mg Alkoxyamin (IIa), 11 mg Nitroxid (Ia) und 12 mg Vazo 88™ (Fa. DuPont) beigemischt. Die Polymerisation wurde analog der allgemeinen Durchführungsvorschrift für Nitroxid-gesteuerte Polymerisationen durchgeführt.

Herstellung der Klebeschichten

Die Beschichtungen erfolgten für die angegebenen Beispiele auf einer Laborbeschichtungsanlage der Firma Pagendarm. Die Bahnbreite betrug 50 cm. Die Beschichtungsspaltbreite war zwischen 0 und 1 cm variabel einstellbar. Die Länge des Wärmekanals betrug ca. 20 m. Die Temperatur im Wärmekanal war in vier Zonen einteilbar und jeweils zwischen Raumtemperatur und 120 °C frei wählbar.

Es wurde eine Mehrkomponenten-Misch- und Dosieranlage der Firma Spritztechnik-EMC verwendet. Das

Mischsystem war dynamisch. Der Mischkopf war für zwei flüssige und eine gasförmige Komponente konzipiert. Der Mischrotor hatte eine variable Drehzahl bis max. ca. 5.000 U/min. Bei den Dosierpumpen dieser Anlage handelte es sich um Zahnradpumpen mit einer Förderleistung von max. ca. 2 L/min.

Beide Komponenten werden in erwärmtem Zustand in das Mischaggregat eingebracht, um die Fließviskosität des oder der Harze sowie des Polyacrylates herabzusetzen.

Im folgenden werden 5 Rezepturen für die Herstellung von Haftklebemassen nach dem erfindungsgemäßen Verfahren dargestellt, wobei hinter jeder Komponente deren Masse angegeben ist, die in den Mischer eingebracht wurde.

Rütapox™ 161 : Epoxy-Harz der Bakelite AG auf Bisphenol A Basis
Desmodur™ L75: multifunktionelles Isocyanat der Bayer AG

Beispiel 1

| | |
|---|---|
| Polyacrylat 1 | 10,0 kg |
| Rütapox™ 161 | 1,2 kg |

Beispiel 2

| | |
|---|---|
| Polyacrylat 2 | 10,0 kg |
| Rütapox™ 161 | 1,2 kg |

Beispiel 3

| | |
|---|---|
| Polyacrylat 3 | 10,0 kg |
| Desmodur™ L75 | 0,3 kg |

Beispiel 4

| | |
|---|---|
| Polyacrylat 1 | 10,0 kg |
| Rütapox™ 161 | 0,6 kg |

Beispiel 5

| | |
|---|---|
| Polyacrylat 2 | 10,0 kg |
| Rütapox™ 161 | 0,6 kg |

Allgemeines Herstellverfahren für Haftklebebänder

Die Polyacrylate (1 bis 3) werden nach Zudosierung des Harzes auf einer handelsüblichen Beschichtungsanlage auf handelsüblichem, beidseitig silikonisiertem Papier zu einer Bahn von 50 μm Dicke ausgestrichen und im anschließenden Trockenkanaldurchgang bei einer Temperatur von Raumtemperatur bis 140 °C und einer Verweildauer von 10 min bis 30 min zu einer Haftklebemasse vernetzt.

Ergebnisse:

Die in den nach den oben beschriebenen erfindungsgemäßen Verfahren hergestellten Polyacrylate wurden als Haftklebemassen ausgetestet. Zur Beurteilung wurde die Scherfestigkeit der Beispiele 1 bis 5 ermittelt und die Klebkraft gemessen. Es wurde entsprechend der Testmethoden A und B vorgegangen. Die Ergebnisse sind in der folgenden Tabelle 1 zusammengefaßt.

Tabelle 1

| Beispiel | Testmethode A Klebkraft Stahl (N/cm) | Testmethode B Scherfestigkeit (min) |
|---|---|---|
| 1 | 3,2 | + 10000 |
| 2 | 3,0 | + 10000 |
| 3 | 4,1 | 1250 |
| 4 | 4,0 | 480 |
| 5 | 3,7 | 895 |

Die Angabe "+ 10000" soll ausdrücken, daß der Test nach 10000 min abgebrochen wurde.
Die Meßwerte belegen, daß die Beispiele, die nach dem erfindungsgemäßen Verfahren, hergestellt wurden, haftklebrige Eigenschaften besitzen.

**Patentansprüche**

1. Verfahren zur Herstellung von Acrylatschmelzhaftklebern, umfassend die Schritte

(a) Bereitstellen eines haftklebrigen Polyacrylats und eines di- oder polyfunktionellen Reaktivharzes, wobei das haftklebrige Polyacrylat zumindest eine funktionelle Gruppe aufweist, die es zur Reaktion mit dem di- oder polyfunktionellen Reaktivharz befähigen;
(b) Herstellen eines Gemisches, umfassend das haftklebrige Polyacrylat und das di- oder polyfunktionelle Reaktivharz, durch Mischen des haftklebrigen Polyacrylats in der Schmelze mit dem di- oder polyfunktionellen Reaktivharz;
(c) Beschichten des Gemisches auf ein Trägermaterial; und
(d) thermisches Aushärten des Gemisches auf dem Trägermaterial,
**dadurch gekennzeichnet, daß** das haftklebrige Polyacrylat aus einer Comonomerzusammensetzung gebildet wird, die

(a1) 75 bis 98 Gew.-% Acrylsäureester und/oder Methacrylsäureester der Formel $CH_2=C(R_1)(COOR_2)$, wobei $R_1$ H oder $CH_3$ darstellt und $R_2$ eine Alkylkette mit 1 bis 20 Kohlenstoffatomen darstellt;
(a2) 0 bis 10 Gew.-% Acrylsäure und/oder Methacrylsäure der Formel $CH_2=C(R_1)(COOH)$, wobei $R_1$ H oder $CH_3$ darstellt;
(a3) 0 bis 5 Gew.-% olefinisch ungesättigte Monomere mit UV-vernetzenden funktionellen Gruppen;
(a4) 0 bis 20 Gew.-% olefinisch ungesättigte Monomere mit funktionellen Gruppen, die zur Reaktion mit den Reaktivharzen befähigt sind;

umfaßt.

2. Verfahren nach Anspruch 1, **dadurch gekennzeichnet, daß** das haftklebrige Polyacrylat aus einer Comonomerzusammensetzung gebildet wird, die

(a1) 86 bis 90 Gew.-% Acrylsäureester und/oder Methacrylsäureester der Formel $CH_2=C(R_1)(COOR_2)$, wobei $R_1$ H oder $CH_3$ darstellt und $R_2$ eine Alkylkette mit 1 bis 20 Kohlenstoffatomen darstellt;
(a2) 4 bis 6 Gew.-% Acrylsäure und/oder Methacrylsäure der Formel $CH2=C(R_1)(COOH)$, wobei $R_1$ H oder $CH_3$ darstellt;
(a3) 0,5 bis 1,5 Gew.-% olefinisch ungesättigte Monomere mit UV-vernetzenden funktionellen Gruppen; und
(a4) 0 bis 20 Gew.-% olefinisch ungesättigte Monomere mit funktionellen Gruppen, die zur Reaktion mit den

Reaktivharzen befähigt sind;
umfaßt.

3. Verfahren nach einem der vorstehenden Ansprüche, **dadurch gekennzeichnet, daß** das bi- oder multifunktionelle Reaktivharz aus der Gruppe gewählt ist, die Epoxy-Harze, Novolak-Harze, Melamin-Harze, Terpenphenol-Harze, Phenolharze, und Polyisocyanate umfaßt.

4. Verfahren nach einem der vorstehenden Ansprüche, **dadurch gekennzeichnet, daß** Schritt (b) in einem statischen Mischkopf eines Mischers ausgeführt wird.

5. Verfahren nach einem der vorstehenden Ansprüche, **dadurch gekennzeichnet, daß** das Gemisch in Schritt (c) über eine Düse, ein Rakel oder einen Walzenstuhl auf das Trägermaterial beschichtet wird.

6. Verfahren nach einem der vorstehenden Ansprüche, **dadurch gekennzeichnet, daß** das Trägermaterial mit einer konstanten Geschwindigkeit während des Beschichtens mit dem Gemisch bewegt wird.

7. Verfahren nach einem der vorstehenden Ansprüche, **dadurch gekennzeichnet, daß** das mit dem Gemisch beschichtete Tragermaterial zum thermischen Aushärten durch einen Wärmekanal geführt wird.

8. Verwendung eines nach einem der vorstehenden Ansprüche hergestellten Acrylatschmelzhaftklebers als Klebeband.

9. Verwendung eines nach einem der vorstehenden Ansprüche hergestellten Acrylatschmelzhaftklebers für ein Klebeband.

## Claims

1. Process for preparing acrylic hotmelt pressure-sensitive adhesives which comprises the steps of

(a) providing a pressure-sensitively adhesive polyacrylate and a difunctional or polyfunctional reactive resin, the pressure-sensitively adhesive polyacrylate having at least one functional group which enables it to react with the difunctional or polyfunctional reactive resin;
(b) preparing a mixture comprising the pressure-sensitively adhesive polyacrylate and the difunctional or polyfunctional reactive resin by mixing the pressure-sensitively adhesive polyacrylate in the melt with the difunctional or polyfunctional reactive resin;
(c) coating the mixture onto a backing material; and
(d) thermally curing the mixture on the backing material,
**characterized in that** the pressure-sensitively adhesive polyacrylate is formed from a comonomer composition containing

(a1) 75 to 98% by weight of acrylic and/or methacrylic esters of the formula $CH_2=C(R_1)$ $(COOR_2)$, where $R_1$ is H or $CH_3$ and $R_2$ is an alkyl chain having 1 to 20 carbon atoms;
(a2) 0 to 10% by weight of acrylic and/or methacrylic acid of the formula $CH_2=C(R_1)(COOH)$, where $R_1$ is H or $CH_3$;
(a3) 0 to 5% by weight of olefinically unsaturated monomers having UV-crosslinking functional groups;
(a4) 0 to 20% by weight of olefinically unsaturated monomers having functional groups capable of reaction with the reactive resins.

2. Process according to Claim 1, **characterized in that** the pressure-sensitively adhesive polyacrylate is formed from a comonomer composition containing

(a1) 86 to 90% by weight of acrylic and/or methacrylic esters of the formula $CH_2=C(R_1)$ $(COOR_2)$, where $R_1$ is H or $CH_3$ and $R_2$ is an alkyl chain having 1 to 20 carbon atoms;
(a2) 4 to 6% by weight of acrylic and/or methacrylic acid of the formula $CH_2=C(R_1)(COOH)$, where $R_1$ is H or $CH_3$;
(a3) 0.5 to 1.5% by weight of olefinically unsaturated monomers having UV-crosslinking functional groups; and
(a4) 0 to 20% by weight of olefinically unsaturated monomers having functional groups capable of reaction with the reactive resins.

3. Process according to any one of the preceding claims, **characterized in that** the difunctional or polyfunctional reactive resin is selected from the group consisting of epoxy resins, novolak resins, melamine resins, terpene-phenolic resins, phenolic resins and polyisocyanates.

4. Process according to any one of the preceding claims, **characterized in that** step (b) is performed in a static mixing head of a mixer.

5. Process according to any one of the preceding claims, **characterized in that** the mixture in step (c) is coated onto the backing material via a die, a doctor blade or a roll mill.

6. Process according to any one of the preceding claims, **characterized in that** the backing material is moving at a constant speed while being coated with the mixture.

7. Process according to any one of the preceding claims, **characterized in that** the backing material coated with the mixture is passed through a heating tunnel for thermal curing.

8. Use of an acrylic hotmelt pressure-sensitive adhesive prepared according to any one of the preceding claims as adhesive tape.

9. Use of an acrylic hotmelt pressure-sensitive adhesive prepared according to any one of the preceding claims for an adhesive tape.

**Revendications**

1. Procédé de préparation d'autoadhésifs fusibles à base d'acrylate, comprenant les étapes consistant à

(a) préparer un polyacrylate autoadhésif et une résine réactive difonctionnelle ou polyfonctionnelle, le polyacrylate autoadhésif présentant au moins un groupe fonctionnel qui est apte à une réaction avec la résine réactive difonctionnelle ou polyfonctionnelle ;
(b) préparer un mélange, comprenant le polyacrylate autoadhésif et la résine réactive difonctionnelle ou polyfonctionnelle par mélange du polyacrylate autoadhésif en masse fondue avec la résine réactive difonctionnelle ou polyfonctionnelle ;
(c) revêtir le mélange sur un matériau support ; et
(d) durcir thermiquement le mélange sur le matériau support,
**caractérisé en ce que** le polyacrylate autoadhésif est formé à partir d'une composition de comonomères qui comprend

(a1) 75 à 98% en poids d'ester de l'acide acrylique et/ou d'ester de l'acide méthacrylique de formule $CH_2=C(R_1)(COOR_2)$, dans laquelle $R_1$ représente H ou $CH_3$ et $R_2$ représente une chaîne alkyle comprenant 1 à 20 atomes de carbone ;
(a2) 0 à 10% en poids d'acide acrylique et/ou d'acide méthacrylique de formule $CH_2=C(R_1)(COOH)$, dans laquelle $R_1$ représente H ou $CH_3$;
(a3) 0 à 5% en poids de monomères oléfiniquement insaturés présentant des groupes fonctionnels réticulant sous l'effet des UV ;
(a4) 0 à 20% en poids de monomères oléfiniquement insaturés présentant des groupes fonctionnels qui sont aptes à une réaction avec les résines réactives.

2. Procédé selon la revendication 1, **caractérisé en ce que** le polyacrylate autoadhésif est formé à partir d'une composition de comonomères qui comprend

(a1) 86 à 90% en poids d'ester de l'acide acrylique et/ou d'ester de l'acide méthacrylique de formule $CH_2=C(R_1)(COOR_2)$, dans laquelle $R_1$ représente H ou $CH_3$ et $R_2$ représente une chaîne alkyle comprenant 1 à 20 atomes de carbone ;
(a2) 4 à 6% en poids d'acide acrylique et/ou d'acide méthacrylique de formule $CH_2=C(R_1)(COOH)$, dans laquelle $R_1$ représente H ou $CH_3$;
(a3) 0,5 à 1,5% en poids de monomères oléfiniquement insaturés présentant des groupes fonctionnels réticulant sous l'effet des UV ; et

(a4) 0 à 20% en poids de monomères oléfiniquement insaturés présentant des groupes fonctionnels qui sont aptes à une réaction avec les résines réactives.

3. Procédé selon l'une quelconque des revendications précédentes, **caractérisé en ce que** la résine réactive difonctionnelle ou polyfonctionnelle est choisie dans le groupe qui comprend les résines époxy, les résines novolaque, les résines mélaminées, les résines terpènephénoliques, les résines phénoliques et les polyisocyanates.

4. Procédé selon l'une quelconque des revendications précédentes, **caractérisé en ce que** l'étape (b) est réalisée dans une tête de mélange statique d'un mélangeur.

5. Procédé selon l'une quelconque des revendications précédentes, **caractérisé en ce que** le mélange dans l'étape (c) est revêtu par l'intermédiaire d'une buse, d'une racle ou d'un laminoir sur le matériau support.

6. Procédé selon l'une quelconque des revendications précédentes, **caractérisé en ce que** le matériau support est déplacé à une vitesse constante pendant le revêtement par le mélange.

7. Procédé selon l'une quelconque des revendications précédentes, **caractérisé en ce que** le matériau support revêtu par mélange est guidé à travers un canal chauffant en vue du durcissement thermique.

8. Utilisation d'un autoadhésif fusible à base d'acrylate préparé selon l'une quelconque des revendications précédentes comme ruban adhésif.

9. Utilisation d'un autoadhésif fusible à base d'acrylate préparé selon l'une quelconque des revendications précédentes pour un ruban adhésif.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10034069
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A
- WO 9801478 A1
- WO 9931144 A1


### In der Beschreibung aufgeführte Nicht-Patentliteratur


- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. 1994
- **HOUBEN WEYL.** *Methoden der Organischen Chemie,* vol. E 19a, 60-147
- **HAWKER.** Beitrag zur Hauptversammlung. American Chemical Society, 1997
- **HUSEMANN.** *Beitrag zum IUPAC World-Polymer Meeting,* 1998
- *Macromolecules,* 2000, vol. 33, 243-245
- Ullmanns Enzyklopädie der technischen Chemie. vol. 12, 525-555
- **SKELHORNE ; INKS ; PAINTS.** Electron Beam Processing. *Chemistry and Technology of UV and EB formulation for Coatings,* 1991, vol. 1
- *Journal of American Chemical Society,* 1999, vol. 121 (16), 3904-3920